# EUROPEAN PATENT APPLICATION

(11) **EP 1 277 790 A2**
(43) Date of publication of application: **22.01.2003**
(21) Application number: 02016819.1
(22) Date of filing: 04.03.1998
(51) Int. Cl.: C08K 5/00, C08K 5/12, C08K 5/20, C07C 69/017

(54) **Nucleators for crystallizable thermoplastic polymers**

(62) Divisional of application: 98103812.8
(71) Applicant: Ciba Specialty Chemicals Holding Inc., 4057 Basel (CH)
(72) Inventor: Schmidt, Hans-Werner, 95444 Bayreuth (DE); Schildbach, Thomas, 8479 Eischen (LU)

(57) **Abstract**

Disclosed are compositions comprising efficient nucleators for crystallizable thermoplastic polymers and, in particular, nucleators that comprise moieties that are capable of forming intermolecular hydrogen bonds and that are thermally stable, and the use thereof.

## Description

This invention relates to compositions comprising nucleators for crystallizable thermoplastic polymers and in particular to nucleators that comprise moieties that are capable of forming intermolecular hydrogen bonds and that are thermally stable, and to the use thereof.

Nucleating agents and clarifiers are commonly used in industrial practice in combination with crystallizable thermoplastic polymers to reduce processing cycle times or to impart improved physico-chemical characteristics, such as various optical and mechanical properties, as well as to reduce mold shrinkage. Elaborate lists of nucleating agents and clarifiers can be found in, for example, US Pat. No. 3,367,926, Plastics Additives Handbook (4th Ed. Hanser, Munich, 1990, p. 863). Typical nucleating agents known in the art are metallic salts of aliphatic or aromatic carboxylic acids, aromatic salts, metallic salts of aromatic phosphorus compounds, quinacridones, pigments, polymers having melting points, highly branched polymers containing dendritic branches (dendrimers), and minerals such as chalk, gypsum, clay, kaolin, mica, talc and silicates, as well as combinations thereof (US Pat. Nos. 5,278,216; 5,137,973; 4,749,736; 4,694,064; 4,338,228; 3,852,237; U. Johnsen and K.-H. Moos, Angew. Makromol. Chem, vol. 74, p. 1 (1978); A. Wlochowicz and M. Eder, Angew. Makromol. Chem, vol. 171, p. 79 (1989); H. N. Beck, J. Appl. Polym. Sci., vol. 11, p. 673 (1967); F. L. Binsbergen, Polymer, vol. 11, p. 253 (1970)). In addition, German Offenlegungsschrift 1951 632 discloses the use of solid, crystalline aromatic carboxilicimide-diphthalimides and N-substituted aromatic carboxylic imide-diphthalimides.

More recently developed nucleating agents and clarifiers dissolve in the polymer melt (R. Schlotmann and R. Walker, Kunststoffe, vol. 86, p. 1002 (1996)), which was found to be effective for improving dispersion of these additives. Most popular have become compounds that are based on D-sorbitol, which belongs to the general chemical family of carbohydrates, that is defined as polyhydroxy aldehydes, polyhydroxy ketones, or compounds that can be hydrolyzed to them (R. T. Morrion and Robert Neilson Boyd, Organic Chemistry, 2nd. Ed., (Allyn and Bacon, Inc., Boston), 1966, p. 983). There are several commercial nucleators based on sorbitol including 1,3-2,4-di(benzylidene)-D-sorbitol (Millad 3905, Milliken Chemical Co.); 1,3-2,4-di(4-tolylidene)-D-sorbitol (Millad 3940, Milliken Chemical Co.); 1,3-2,4-di(4-ethylbenzylidene)-D-sorbitol (N-4, Mitsui Petrochemical Industries, Ltd.). US Pat. Nos. 5,574,174; 5,198,484; and WO 95/13317 disclose the preparation and use of sorbitol derivatives. US Pat. No. 4,294,747 discloses polyhydric alcohol acetals of benzaldehyde and derivatives thereof. US Pat. No. 5,216,051 describes triacetal polyol compounds. Use of dibenzylidene sorbitol (US Pat. No. 4,016,118) in combination with phenyl phosphate compounds is disclosed in US Pat. No. 4,585,817. Despite widespread commercial application, there exist a number of difficulties that are associated with carbohydrate-based compounds as nucleating and clarifying agents. First, the preparation and purification of sorbitol-based nucleating agents is cumbersome. Another of the well-known difficulties associated with the use of sorbitol clarifying agents in, for example, polyolefins resins is the formation of small bubbles in articles fabricated from these resins, which appear as white points (US Pat. No. 5,198,484). Finally, among other disadvantages is their unsatisfactory temperature stability that, unfortunately, is inherent to this class of materials.

Thus, a need continues to exist for effective nucleating agents that are useful to enhance processing and physico-chemical properties of thermoplastic polymers.

Now, it has been discovered that certain organic compounds that comprise moieties that are capable of forming intermolecular hydrogen bonds are effective nucleating agents for crystallizable thermoplastic polymers, provided that those compounds also comprise moieties that are compatible with the thermoplastic polymer.

Thus, the present invention relates to compositions which comprise:
(i) one or more nucleators that comprise moieties that are capable of forming intermolecular hydrogen bonds; and
(ii) one or more crystallizable thermoplastic polymers, which may optionally include common additives and fillers. Particularly, the present invention relates to A composition comprising (i) a crystallizable thermoplastic polymer and (ii) one or more nucleators of the formula 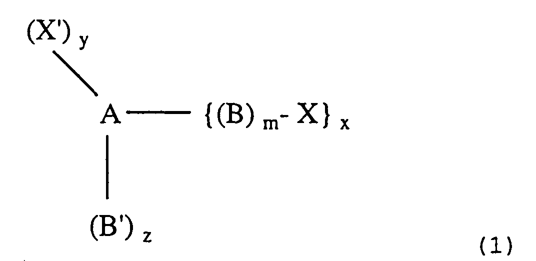
wherein:
x is an integer from two to seven;
y is an integer from zero to four;
z is an integer from zero to four;
the sum x + y + z equals an integer from three to seven;
m is an integer from one to three;
and wherein A is a center that is covalently bonded with moieties B, B' or X', or combinations thereof; wherein said moieties B and B' comprise at least one unit capable of forming one or more intermolecular hydrogen bonds; wherein moieties X and X' are compatible with said crystallizable thermoplastic polymer; and wherein X is covalently bonded to B.

Another aspect of the present invention relates to compositions of a crystallizable thermoplastic polymer and a nucleator that comprises moieties that are capable of forming intermolecular hydrogen bonds and moieties that are compatible with the crystallizable thermoplastic polymer.

Another aspect of the present invention relates to compositions of a crystallizable thermoplastic polymer and a nucleator that are characterized in that, upon cooling from the melt, their peak temperature of crystallization is at least about 3 °C higher than the peak temperature of crystallization of the neat -that is nucleating agent free-thermoplastic polymer.

Still another aspect relates to compositions of a crystallizable thermoplastic polymer and a nucleator that are characterized in that, after cooling from the melt, the size of the spherulites in the crystallized polymer is less than 50 % of the size of the spherulites in the neat crystallized thermoplastic polymer.

Still yet another aspect of the present invention relates to compositions of a crystallizable thermoplastic polymer and one or more nucleators that are of reduced haze when compared to the neat crystallized thermoplastic polymer.

Yet another aspect of the present invention relates to compositions of a crystallizable thermoplastic polymer and one or more nucleators that are of enhanced thermal stability.

Still other aspects of the present invention relate to a novel process for enhancing the rate of crystallization of a melt of a crystallizable thermoplastic polymer, which comprises adding to said melt an effective amount of the nucleators of this invention, and to products made according to that novel process.

Still yet another object of the present invention is to provide products made from crystallizable thermoplastic polymers that comprise an effective amount of the nucleators of this invention.

Advantages that flow from the present invention include a reduction of the processing times of crystallizable thermoplastic polymers. Moreover, the polymers formed in accordance with this invention are characterized by relatively improved thermal, optical and/or mechanical properties. Additional objects, advantages and novel features of the present invention will be set forth in the description that follows, and in part will become apparent to those skilled in the art on examination of the following , or may be learned by practice of the invention. The objects and advantages of the invention may be realized and attained by means of the instrumentalities and combinations particularly pointed out in the appended claims.

The invention will be more fully understood and further advantages will become apparent in the following detailed description of the invention and the accompanying drawings in which:
FIG. 1 is an optical photomicrograph of a film of isotactic polypropylene which does not contain a nucleating agent. The film was compression molded at 210 °C, subsequently cooled at a rate of 10 °C/min and crystallized at 104 °C. Magnification 120 times.
FIG. 2 is an optical photomicrograph of a film of isotactic polypropylene which contains 0.75 % by weight of the nucleating agent tris[3,4-bis(decyloxy)phenylene-carbonylimino-1,4-phenylene]amine, (hereinafter also referred to as compound I-1 of Table 1). The film was compression molded at 210 °C, subsequently cooled at a rate of 10 °C/min and crystallized at 104 °C. Magnification 120 times.
FIG. 3 depicts Thermo-Gravimetric Analysis records of the nucleating agent tris[3,4-bis(decyloxy)phenylene-carbonylimino-1,4-phenylene]amine, (compound I-1) (curve A, solid curve) and of D-sorbitol (curve B, broken line) showing the enhanced thermal stability of the former compound.

### The Nucleators

The nucleators for crystallizable thermoplastic polymers according to this invention are of the following general schematic formula: 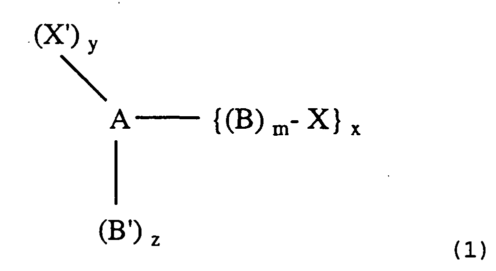 wherein:
x is an integer from two to seven;
y is an integer from zero to four;
z is an integer from zero to four;
the sum x + y + z equals an integer from three to seven;
m is an integer from one to three.

In formula (1), A is a center that is covalently bonded to moieties B, B' or X', or combinations thereof, wherein the moieties B and B' comprise at least one unit capable of forming one or more intermolecular hydrogen bonds; and wherein the moieties X and X' are compatible with the crystallizable thermoplastic polymer, and wherein X is covalently bonded to B. The role of the center moiety A is to provide a means to connect a plurality of moieties B, B', or X' and combinations thereof that are beneficial for the formation of structures that induce nucleation of the crystallizable thermoplastic polymer.

Preferred nucleators for crystallizable thermoplastic polymers according to this invention are those of the schematic formula (1), wherein:
x is an integer from three to six;
y is an integer from zero to three;
z is an integer from zero to two;
the sum x + y + z equals an integer from three to seven;
m is the integer one or two.

Among the preferred nucleators according to this invention more preferred are those of the formula (1) wherein:
x is the integer three or four;
y is an integer from zero to two;
z is the integer zero or one;
the sum x + y + z equals an integer from three to six;
m is the integer one or two.

Most preferred nucleators for crystallizable thermoplastic polymers according to this invention are of the general schematic formula (1), wherein:
x is three;
y is an integer from zero to two;
z is the integer zero or one;
the sum x + y + z equals an integer from three to six;
m is the integer one or two.

Illustrative of moieties that are useful as the center A of the nucleators according to the present invention are carbon, nitrogen, phosphorus, boron and silicon, without and with one or more aromatic, cycloaliphatic, aliphatic, alkene, alkyne, diene, ether, thioether or ketone links, and combinations thereof, connected to them; unsubstituted and substituted, single and fused 4, 5, 6 or 7 membered aromatic and cycloaliphatic carbon rings, which rings may include one or more heteroatoms such as nitrogen, sulfur and oxygen, and combinations thereof, and without and with one or more aromatic, cycloaliphatic, aliphatic, alkene, alkyne, diene, ether, thioether or ketone links, and combinations thereof, connected to them.

Preferred moieties are carbon and nitrogen, without and with one or more aromatic, cycloaliphatic or -(CH₂)ₚ-links, and combinations thereof, connected to them, where p is 1 or 2; unsubstituted and substituted, single and fused 5 and 6 membered aromatic and cycloaliphatic carbon rings, which rings may include one or more heteroatoms such as nitrogen, sulfur or oxygen, and combinations thereof, and without and with one or more aromatic, cycloaliphatic or -(CH₂)ₚ- links, and combinations thereof, connected to them, where p is 1 or 2.

Among the preferred moieties, more preferred moieties are carbon and nitrogen, with one or more aromatic or cycloaliphatic links, and combinations thereof, connected to them; unsubstituted and substituted, single and fused 6 membered aromatic and cycloaliphatic carbon rings, which rings may include one or more nitrogen atoms, without and with one or more aromatic, cycloaliphatic or -(CH₂)ₚ- links, and combinations thereof, connected to them, where p is 1 or 2.

Most preferred among the more preferred moieties that are useful as the center A of the nucleators according to the present invention are the following structures which may or may not be substituted:

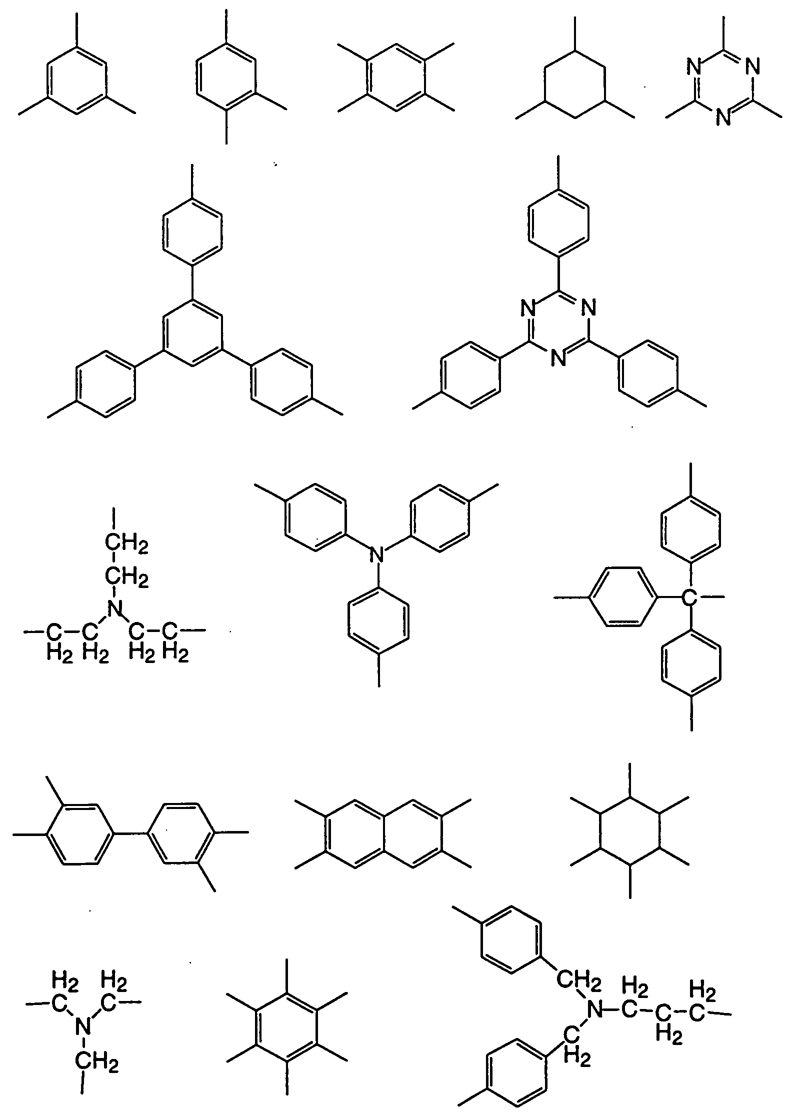

The moieties B and B' of the nucleators according to the present invention are those moieties that are capable of forming one or more intermolecular hydrogen bonds between the nucleator molecules of which they are part. Hereinafter, a hydrogen bond is defined as that bond that is due to the electrostatic interaction between a hydrogen atom and a strong electronegative element of small atomic radius, such as fluor, oxygen and nitrogen, and to a lesser extend, chlorine and sulfur (Lehrbuch der Organischen Chemie, H. Beyer; Hirzel, Stuttgart, 1976, p. 105, 106). The function of the moieties B and B' is to induce and guide and stabilize the formation of the structures that are beneficial for nucleation of the crystallizable thermoplastic polymer.

Illustrative examples of moieties B, which may be the same or different at each occurrence, are those that comprise esters, thioester, ethers, thioethers, ketones, secondary and tertiary amines, amides, imides, imines, azo, azoxy, ureas, urethanes, thiourethanes, sulfonamides and the like.

Preferred moieties B, which may be the same or different at each occurrence, are those that comprise one or more units selected among amides, imides, imines, ureas, urethanes, thiourethanes, sulfonamides and the like. Among the preferred moieties, more preferred moieties B, which may be the same or different at each occurrence, are those that comprise one or more units selected among amides, imides and sulfonamides. Especially preferred are those that comprise amide units.

Illustrative examples of moieties B', which may be the same or different at each occurrence, are those moieties that comprise acids such as carboxylic acids, sulfonic acids, alcohols, phenols, thiols, amines, acetamides, cyano groups, hydrazine, and the like.

The nucleators for crystallizable thermoplastic polymers according to the present invention comprise moieties X and X', the function of which is to compatibilize with, and assist in dispersing of the nucleators within the crystallizable thermoplastic polymers. Hence, selection of the particular chemical nature of the moieties X and X' is dependent on the choice of the crystallizable thermoplastic polymer. In general, nucleators comprising moieties X and X' that are of a polar nature are used in combination with the more polar thermoplastic polymers comprising polar groups. Nucleators comprising less polar moieties X and X' are used in combination with less polar thermoplastic polymers comprising few or no polar groups. Generally, the moieties X and X', which may or may not be chiral are the same or different at each occurrence and are selected from the group consisting of: H, linear and branched alkyl, alkenyl, alkoxy, alkanoyl, alkylthio, alkylthioalkyl, each having from 1 to about 20 carbon atoms; linear and branched alkylaryl, arylalkyl, alkylsulfinyl, alkoxyalkyl, alkylsulfonyl, alkoxycarbonyl, carboxylic acid, where the alkyl or alkoxy each has from 1 to about 20 carbon atoms; alkyl having from 1 to about 20 carbon atoms substituted with one or more sulfonic acid, carboxylic acid, halogen, nitro, cyano, diazo, or epoxy moieties; one or more substituted and unsubstituted single and fused 3, 4, 5, 6 or 7 membered aromatic and alicyclic carbon rings, which rings may include one or more heteroatoms of nitrogen, sulfur, sulfinyl, sulfonyl or oxygen, such as thiophenyl, pyrolyl, furanyl, pyridinyl, or combinations thereof.

The most preferred embodiments of this invention comprising nucleating agents are selected from the group consisting of:

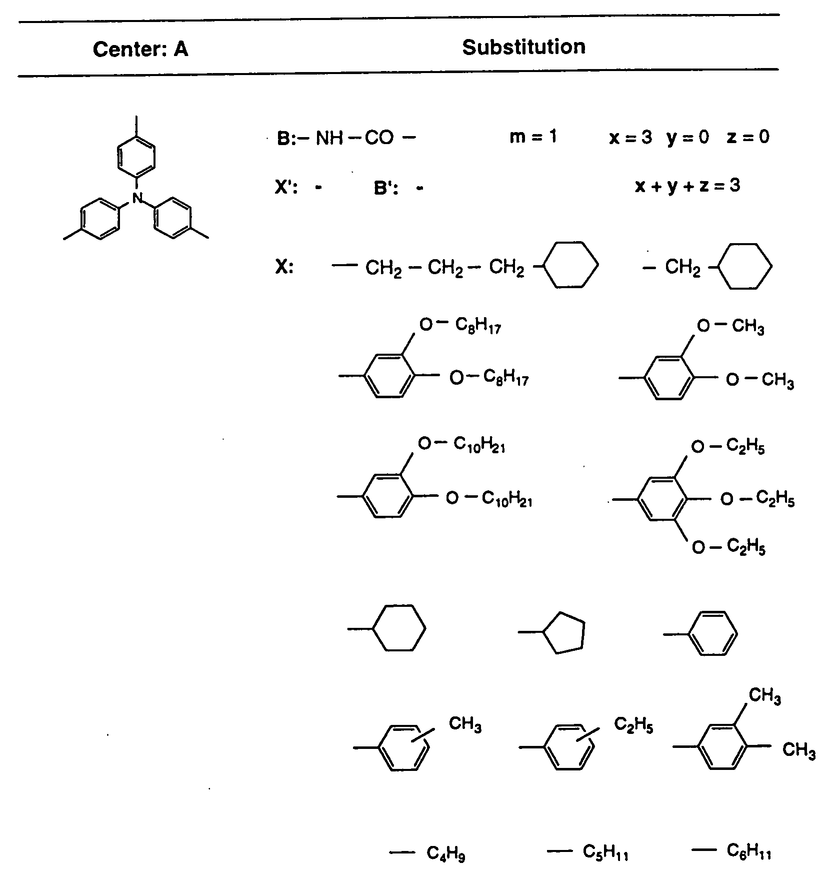

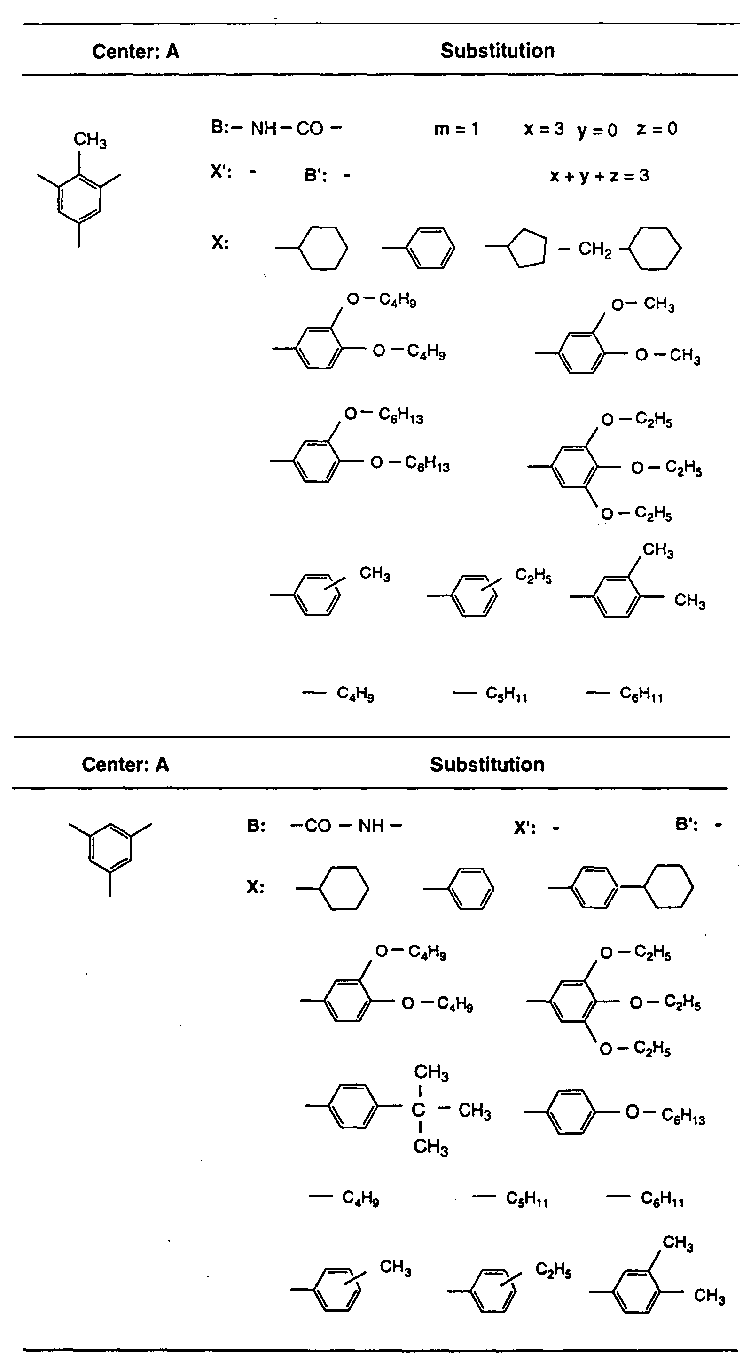

As an illustration of its use, and for further guidance, the above structures are also given according the notation of the schematic formula (1). Preferably, the above nucleators are used in combination with weakly, or non-polar, crystallizable thermoplastic polymers, such as isotactic polypropylene, and copolymers thereof.

The nucleators according to the present invention have thermal properties, such as melting temperatures, that may vary widely, depending on the precize structure of the nucleator. For use in the practice according to the present invention, the nucleators preferably have a solidification temperature, i.e. that temperature or temperature range in which the molten or dissolved nucleator forms an molecular aggregate or solid, is equal to, or exceeds the temperature at which the crystallizable thermoplastic polymer crystallizes in the absence of the nucleator of the present invention.

Particularly excluded from the present invention are those structures that are based on carbohydrates, or comprise carbohydrate units, such as, for example, sorbitol and its derivatives. Such structures generally are well-known, and suffer from limited thermal stability, and, hence, are of restricted use as nucleating agents or clarifiers, especially for crystallizable thermoplastic polymers that have high melting temperatures or softening points, which generally require high processing temperatures. By contrast, the compositions according to the present invention have high decomposition temperatures, typically above 230 °C.

Some compounds of the general structural formula (1) have been described in the prior art. For example, Yasuda et al. described the preparation of N,N',N''-tristearyltrimesamide (Chem. Letters, vol. 7, p. 575 (1996)). Also described is 4,4',4''-tris(stearoylamino)triphenylamine (Y. Yasuda, Y. Takebe, M, Fukumoto, H. Inada and Y. Shirota, Adv. Mat., vol. 8, p. 740 (1996)). However, the use of such compounds in combination with crystallizable thermoplastic polymers, and, particularly, their use as nucleating agents for crystallizable thermoplastic polymers has not been disclosed or suggested.

The amount of the nucleator according to the present invention added to a crystallizable thermoplastic polymer is an "effective amount". As used herein, an "effective amount" is an amount which is sufficient to increase the crystallization peak temperature of the polymer by at least 3 °C. Such amounts will normally correspond to amounts of conventional nucleating agents. In the preferred embodiments of the present invention, the amount of the nucleator employed is in the range from about 0.005 weight percent to about 20 weight percent based on the total weight of the polymer in the composition, and in the particularly preferred embodiments of this invention is from about 0.005 weight percent to about 10 weight percent, on the aforementioned basis. Amongst these particularly preferred embodiments, most preferred are those embodiments where the amount of nucleator employed is from about 0.005 weight percent to about 5 weight percent based on the total weight of the polymer in the composition according to the present invention.

The composition according to the present inventions are characterized in that the size of polymer spherulites in the thermoplastic polymer composition typically is less than 50 % of the size of spherulites in neat crystallized thermoplastic polymer that is void of the present nucleators; and, as a result, the former are of lower haze in comparison with the latter.

### The Crystallizable Thermoplastic Polymers

The crystallizable thermoplastic polymers for use in the practice of this invention may vary widely, and are selected for the particular end uses of the product comprising the compositions of the present invention. Hence, the crystallizable thermoplastic polymers useful in the present invention include all thermoplastic polymers and copolymers commonly used in plastic products. Examples of useful crystallizable thermoplastic homopolymers or copolymers are polyolefins such as polyethylenes, stereoregular polypropylenes, ethylene-propylene copolymers, stereoregular polystyrenes, polynorbonene, polyisobutylene, poly(1-butene), poly(3-methyl-1-butene), poly(1-pentene), poly(4-methyl-1-pentene), poly(1-hexene), poly(5-methyl-1-hexene), poly(2-methylstyrene), poly(4-methoxy styrene) and the like, and copolymers thereof, aromatic or aliphatic polyoxides such as polyoxymethylene, poly(ethylene oxide), poly(tetra-methyloxide), poly(propylene oxide), polyphenylene oxides, polysulfides such as poly(propylene sulfide), poly(phenylene sulfide) and the like, and copolymers thereof, aromatic, aliphatic and aromatic-aliphatic polyamides, such as nylon 6, nylon 12, nylon 6.6, nylon 6.10, and the like, aromatic, aliphatic and aromatic-aliphatic polyesters, such as poly(ethylenetherephthalate), poly(butylenetherephthalate), poly(ethylenenaphthalate), poly(vinylalcohol), polycarbonates.

In addition to the above essential components, the compositions according to the present invention may optionally include one or more other components which are additives commonly employed with thermoplastic resins. Such optional components include fillers, reinforcing components, plasticizers, dispersion aids, impact modifiers, chain extenders, colorants, mold release agents, metal deactivators, antioxidants, light stabilizers, lubricants, antistatic agents, fire retardants, fluorescent whitening agents, biostabilizers, chemical blowing agents, cross-linking agents and other nucleating agents. These optional components are well known to those skilled in the art, and are described in standard texts and handbooks such as Plastics Additives Handbook (4th Ed. Hanser, Munich, 1990).

The compositions according to the present invention can be prepared by blending or mixing the essential ingredients, and other optional components as uniformly as possible employing conventional compounding means. Appropriate compounding means, such as extrusion, batch blending and the like, are well known in the art and will not be described here in detail. Also, all or a portion of the various components can be masterbatched or preblended in the melt or in an appropriately selected solvent.

The compositions according to the present invention are outstandingly suitable for the production of films, fibers, containers, coatings, parts, membranes, rods, tubes, fabrics, and foams and the like that are of improved clarity and mechanical properties, and that are manufactured at reduced cycling times. Thus, the present invention further relates to a process for enhancing the rate of crystallization of a crystallizable thermoplastic polymer that comprises the addition of an amount between about 0.001 percent by weight and about 20 percent by weight of one or more nucleators to yield the above shaped objects.

### EXAMPLES

The compounds of the formula (1) can be prepared by methods known per se, as described in the literature (for example in the standard works such as Houben-Weyl, Methoden der Organischen Chemie [Methods of Organic Chemistry], published by Georg Thieme, Stuttgart), under reaction conditions which are known. In carrying out these reactions, it is also possible to take advantage of variants known per se which are not specifically mentioned here. The starting substances can, if so desired also be formed in situ, by not isolating them out of the reaction mixture but immediately reacting them further to the compounds of the formula (1).

The compounds related to the invention are illustrated by the examples which follow. Given are m.p. = melting points of the various compounds. Heretofore and hereinafter, percentages are by weight; all temperatures are given in degrees Celsius, °C. "Customary working up" means: adding water, extracting with methylene chloride, separating off, drying the organic phase, evaporating to dryness and purifying the product by crystallization, chromatography and/or sublimation.

### Example A:

4.05 g (10.2 mmol) 3,4-bis(octyloxy)benzoic acid chloride and 0.5 g dry LiCl were added under inert atmosphere to 50 ml of dry NMP and 5 ml of dry pyridine and cooled to 5 °C. 0.99 g (3.4 mmol) tris(4-aminophenylene)amine was added. The reaction mixture was heated to 75 °C. After 2 hours the reaction mixture was added to 500 ml of distilled water. The precipitate was filtered off. Customary work-up gives tris[3,4-bis(octyloxy)phenylene-carbonylimino-1,4-phenylene]amine (Table I, No. I-7). m.p.: 229 °C.

The following compounds were prepared analogously:
tris[3,4-bis(decyloxy)phenylene-carbonylimino-1,4-phenylene]amine (compound I-1), m.p.: 211 °C;
tris[3,4-bis(nonyloxy)phenylene-carbonylimino-1,4-phenylene]amine (compound I-2), m.p.: 219 °C;
tris[3,4,5-tris(ethyloxy)phenylene-carbonylimino-1,4-phenylene]amine (compound I-3), m.p.: 258 °C;
tris [cyclopentyl-carbonylimino-1,4-phenylene] amine
(compound I-4), m.p.: 270 °C;
tris[cyclohexyl-carbonylimino-1,4-phenylene] amine
(compound I-5), m.p.: 276 °C;
tris[3-cyclohexylpropylene-carbonylimino-1,4-phenylene]amine
(compound I-6), m.p.: 238 °C;
tris[cyclohexylmethylene-carbonylimino--1,4-phenylene]amine
(compound I-8), m.p.: 335 °C;
tris[phenylcarbonylimino--1,4-phenylene]amine
(compound I-9), m.p.: 198 °C.

### Example B:

1.76 g (12.0 mmol) cyclohexanecarboxylicacid chloride and 0.5 g dry LiCl were added under inert atmosphere to 50 ml of dry NMP and 5 ml of dry pyridine and cooled to 5 °C. 0.40 g (3.0 mmol) 2,4,6-triaminotoluene was added. The reaction mixture was heated to 75 °C. After 2 hours the reaction mixture was added to 500 ml of distilled water. The precipitate was filtered off. Customary work-up gives 2,4,6-(cyclohexanecarbonylimino)toluene (Table I, No. II-1). m.p.: 199 °C.

### Example C:

1.75 g (10.0 mmol) 4-cyclohexylphenylamine and 0.5 g dry LiCl were added under inert atmosphere to 50 ml of dry NMP and 5 ml of dry pyridine and cooled to 5 °C. 0.80 g (3.0 mmol) 1,3,5-benzenetricarboxylicacid chloride was added. The reaction mixture was heated to 75 °C. After 2 hours the reaction mixture was added to 500 ml of distilled water. The precipitate was filtered off. Customary work-up gives 1,3,5-(cyclohexyl-1,4-phenyleneiminocarbonyl)benzene (Table I, No. III-2). m.p.: 317 °C.

The following compounds were prepared analogously:
1,3,5-(4-t-butylphenyleneiminocarbonyl)benzene
(compound III-1), m.p.: 358 °C;
1,3,5- (4-hexyloxyphenyleneiminocarbonyl)benzene
(compound III-3), m.p.: 80 °C;
1,3,5-(n-butyliminocarbonyl)benzene
(compound III-4), m.p.: 219 °C;
1,3,5-(phenyliminocarbonyl)benzene
(compound III-5), m.p.: 311 °C.

### I. GENERAL PROCEDURES

A. Mixing Procedure A
   About 20 mg (1 % by weight) of the powdered additive was added to about 2 g of the powdered isotactic polypropylene and refluxed in a flask with 100 ml of p-xylene (Aldrich Chemical Co.) at 120 °C for about 1 hr. Subsequently, the flask was cooled to room temperature. The mixture was then further cooled with liquid nitrogen and freeze-dried at room temperature under vacuum, yielding a powdered polypropylene-additive mixture. The neat polypropylene was also treated similarly to obtain a reference control sample.
B. Mixing Procedure B
   About 50 mg (1 % by weight) of powdered additive was added to about 4.95 g of the powdered isotactic polypropylene (Aldrich Chemical Co.), tumble mixed and ground in a mortar. Portions of this mixture were heated to 220 °C, unless indicated otherwise, for a period of about 5 to 10 min, and subsequently cooled down to room temperature. Polypropylene alone was similarly treated to produce a blank control sample. The loading of the additives was 1 % by weight unless otherwise noted.
C. Differential Scanning Calorimetry (DSC)
   A Perkin-Elmer DSC instrument (Model DSC 7), operated in a dry nitrogen atmosphere, was used for the analysis of the crystallization behavior of the various mixtures and control samples, according to standard procedures. About 5 to 10 mg of sample was sealed into an aluminum cup, heated from 130 °C to 220 °C at a rate of 10 °C/min, held at 220 °C for 5 min, and then subsequently cooled at a rate of 10 °C/min to 50 °C. The data represented as crystallization peak temperatures (T_{c}) are the peak temperatures of the exotherms in the thermograms that were recorded upon cooling.
D. Thermo-Gravimetric Analysis (TGA)
   An automated Netzsch TGA instrument (STA 409) operated in a air was used for the analysis of the thermal stability of selected samples. About 10 mg of sample was placed into an aluminum oxide crucible and heated from 50 °C to 600 °C at a rate of 10 °C/min.
E. Optical Microscopy
   Selected samples were produced by forming a film from the melt by compression molding at 210 °C and subsequent cooling at a rate of 10 °C/min. These samples were examined in a polarizing optical microscope (Leitz Laborlux 12-Pol) under crossed Nicols in transmitted light.

### II. DESCRIPTION OF EXAMPLES

### Example 1.

Tris[3,4-bis(decyloxy)phenylene-carbonylimino-1,4-phenylene]amine, (compound I-1 in Table 1) (1 % by weight) was mixed with polypropylene, using the mixing procedure A. Both the neat polypropylene reference sample and the mixture were analyzed by Differential Scanning Calorimetry. The crystallization peak temperature of the mixture is 12.4 °C higher than that of the neat control sample.

In the following, this difference between the crystallization temperatures of a mixture according to the present invention and that of the control sample is designated T, which equals 12.4 °C in the present example.

### Example 2.

Compound I-6 in Table 1 (1 % by weight) was mixed with polypropylene, using the mixing procedure B. Both the neat polypropylene reference sample and the mixture were analyzed by Differential Scanning Calorimetry. T = 13.0 °C.

### Example 3.

Examples 1 and 2 were repeated with various compounds that were mixed with polypropylene, using either mixing method A (compounds I-1, I-2 and I-7 ) or method B (compounds I-3, I-4, I-5, I-6, I-8, I-9, II-1, III-1, III-2, III-3, III-4 and III-5). The following Table 1 collects results that were measured using DSC.

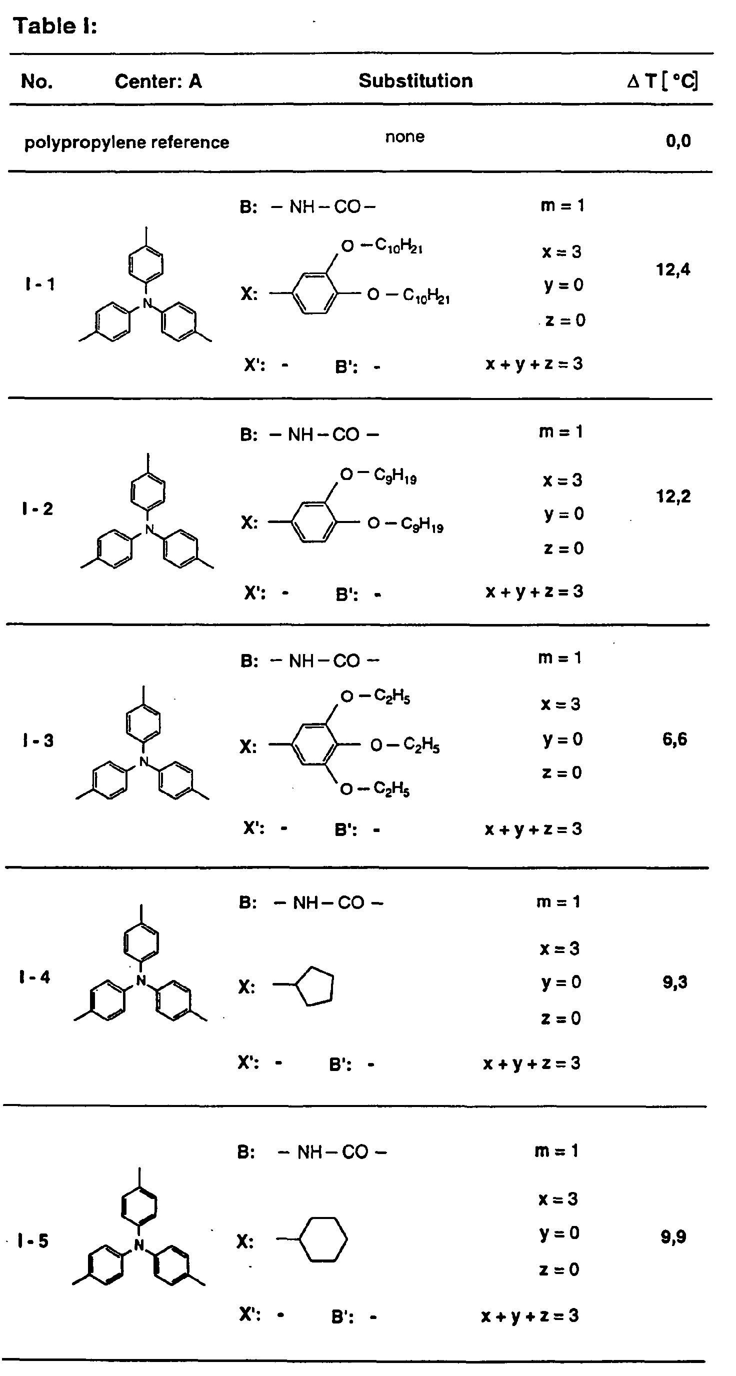

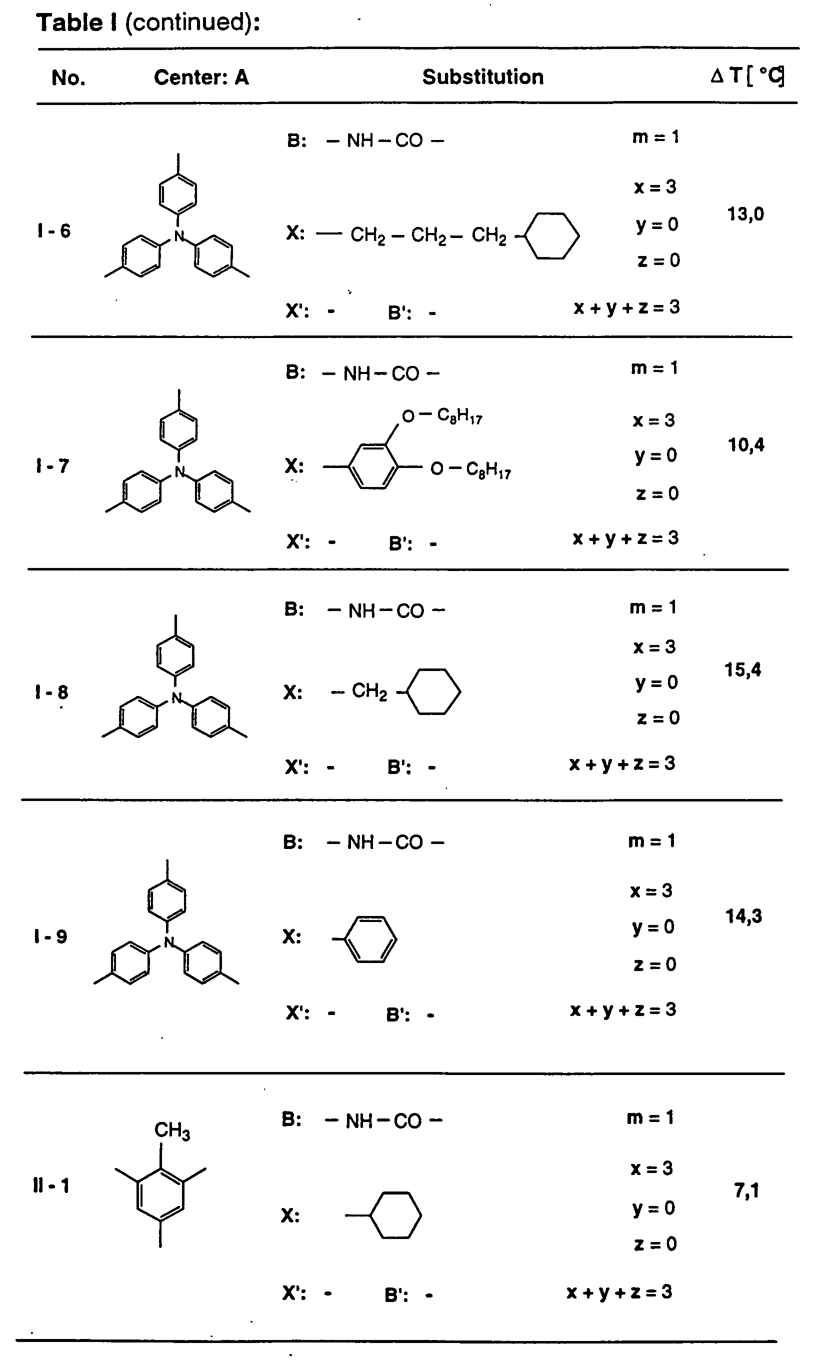

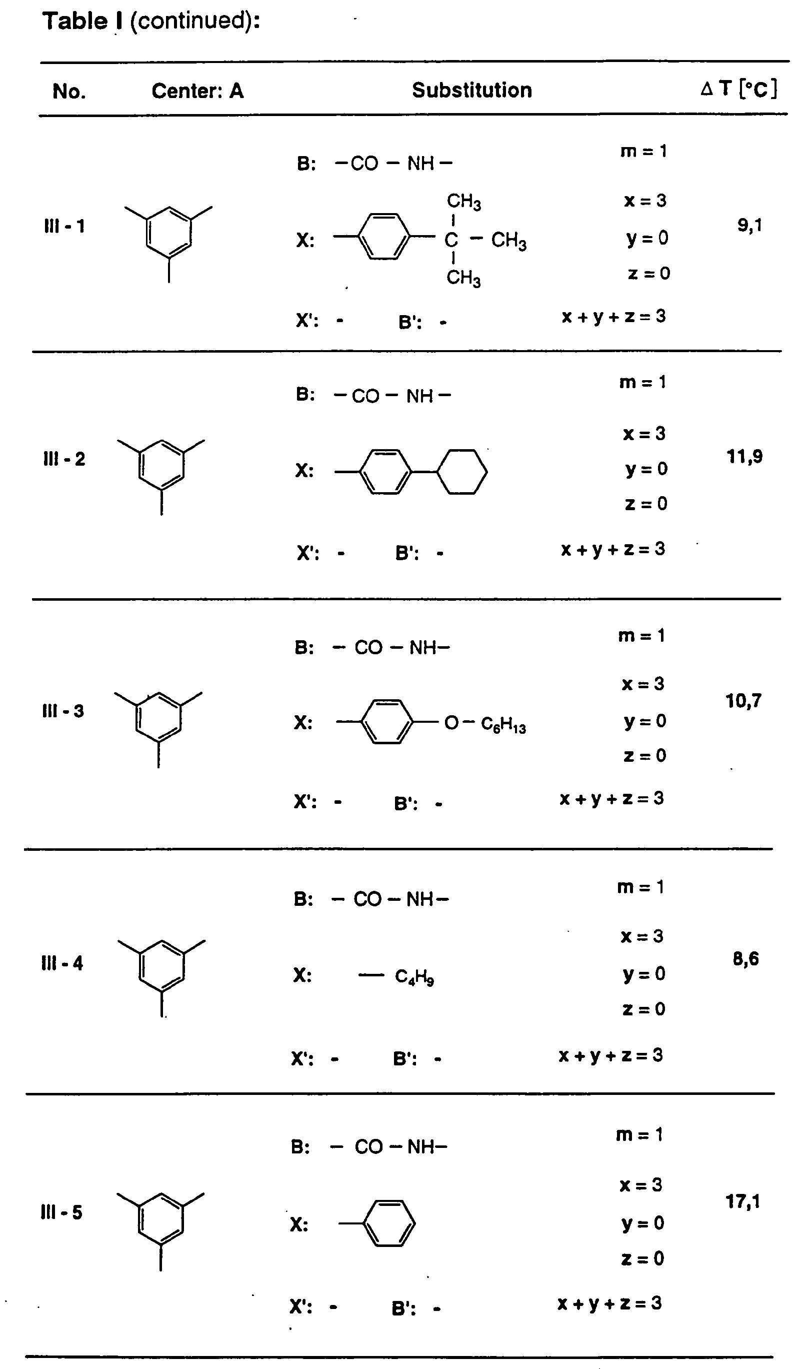

### Example 4.

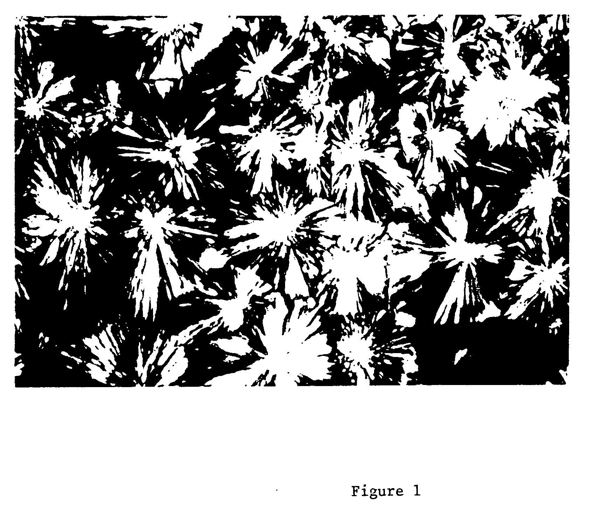

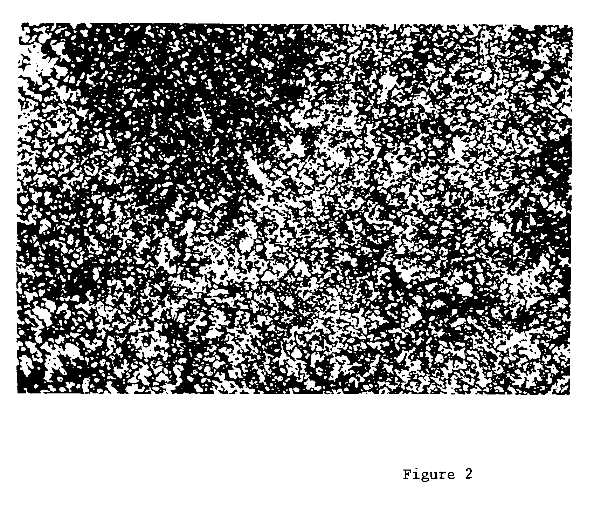

Films of neat, nucleator-free polypropylene and polypropylene containing 1 % by weight of tris[3,4-bis(decyloxy)phenylene-carbonylimino-1,4-phenylene]amine, (compound I-1 in Table 1) were compression molded at 210 °C, subsequently cooled at a rate of 10 °C/min and crystallized at 104 ° C. FIG. 1 is an optical photomicrograph of polypropylene which does not contain a nucleating agent. FIG. 2 is an optical photomicrograph of isotactic polypropylene which contains 1 % by weight of compound I-1. A comparison between the two photomicrographs, which were taken at the same magnification, shows that the spherulite size is much less than 50 % for the polypropylene film which contains the additive than for the neat reference polypropylene, which is indicative of the nucleating ability of the additive; and is the origin of the reduced haze of the former.

### Example 5.

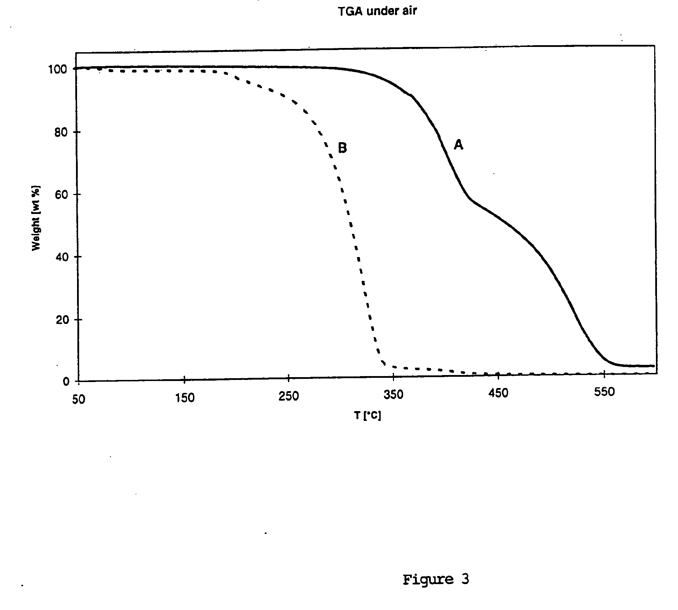

Thermo-Gravimetric Analysis (TGA) was carried out in air on tris[3,4-bis(decyloxy)phenylene-carbonylimino-1,4-phenylene]amine (compound I-1 in Table 1) and standard D-sorbitol. FIG. 3 depicts their respective TGA-curves (marked A and B) showing the enhanced thermal stability in air of the former compound, according to the present invention.

## Claims

1. A composition comprising
(i) a crystallizable thermoplastic polymer and
(ii) one or more nucleators of the formula 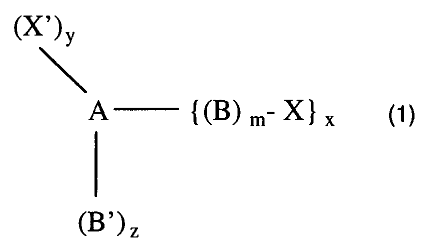 wherein:
x is an integer from two to seven;
y is an integer from zero to four;
z is an integer from zero to four;
the sum x + y + z equals an integer from three to seven;
m is an integer from one to three;
and wherein A is a center that is covalently bonded with moieties B, B' or X', or combinations thereof; wherein said moieties B and B' comprise at least one unit capable of forming one or more intermolecular hydrogen bonds; wherein moieties X and X' are compatible with said crystallizable thermoplastic polymer; and wherein X is covalently bonded to B;
**with the proviso that when A is carbon, B is different from an ester group.**

2. A composition according to claim 1 wherein said center A is selected from the group consisting of
unsubstituted and substituted, single and fused 4, 5, 6 or 7 membered aromatic and cycloaliphatic carbon rings, which rings include one or more heteroatoms such as nitrogen, sulfur and oxygen, and combinations thereof, which may be substituted with one or more aromatic, cycloaliphatic, aliphatic, alkene, alkyne, diene, ether, thioether or ketone links, and combinations thereof;
unsubstituted and substituted, single and fused 4, 5, 6 or 7 membered aromatic and cycloaliphatic carbon rings, which may be substituted with one or more aromatic, cycloaliphatic, aliphatic, alkene, alkyne, diene, ether, thioether or ketone links, and combinations thereof;
carbon, nitrogen, phosphorus, boron and silicon, which may be substituted with one or more aromatic, cycloaliphatic, aliphatic, alkene, alkyne, diene, ether, thioether or ketone links, and combinations thereof, connected to them.

3. A composition according to claims 1 or 2 wherein said moiety B, which may be the same or different at each occurrence, comprises one or more units selected from the group consisting of
secondary and tertiary amines, amides, imides, imines,
esters, thioester, ethers, thioethers, ketones, azo, azoxy, ureas, urethanes, thiourethanes and sulfonamides.

4. A composition according to any of claims 1 to 3 wherein said moiety B', which may be the same or different at each occurrence, are selected from the group of moieties that comprises one or more carboxylic acid and sulfonic acid, alcohol, phenol, thiol, amine, acetamide, cyano and hydrazine groups.

5. A composition according to any of claims 1 to 4 wherein said moieties X and X', which may or may not be chiral, and are the same or different at each occurrence are selected from the group consisting of: H, linear and branched alkyl, alkenyl, alkoxy, alkanoyl, alkylthio, alkylthioalkyl, each having from 1 to 20 carbon atoms; linear and branched alkylaryl, arylalkyl, alkylsulfinyl, alkoxyalkyl, alkylsulfonyl, alkoxycarbonyl, carboxylic acid, where the alkyl or alkoxy each has from 1 to 20 carbon atoms; alkyl having from 1 to 20 carbon atoms substituted with one or more sulfonic acid, carboxylic acid, halogen, nitro, cyano, diazo, or epoxy moieties; one or more substituted and unsubstituted single and fused 3, 4, 5, 6 or 7 membered aromatic and alicyclic carbon rings, which rings may include one or more heteroatoms of nitrogen, sulfur, sulfinyl, sulfonyl or oxygen or combinations thereof.

6. A composition according to any of claims 1 to 5, wherein said composition is **characterized in that** its peak temperature of crystallization is at least 3 ° C higher than the peak temperature of crystallization of said crystallizable thermoplastic polymer.

7. A composition according to any of claims 1 to 6, wherein said composition is **characterized in that** the size of polymer spherulites in said composition is less than 50 % of the size of spherulites in neat crystallized thermoplastic polymer that is void of said nucleators.

8. A process for enhancing the rate of crystallization of a crystallizable thermoplastic polymer that comprises the addition of an amount between about 0.001 percent by weight and about 20 percent by weight of one or more nucleators as defined in any of claims 1 to 6.

9. Shaped objects comprising the composition according to any of claims 1 to 7 selected from the group consisting of films, fibers, containers, coatings, parts, membranes, rods, tubes, fabrics, and foams.

10. A compound of the general formula 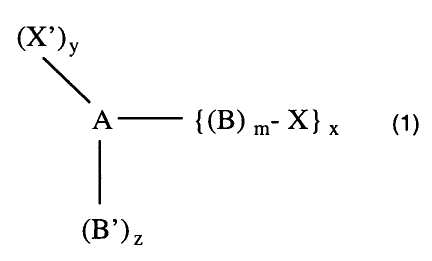 wherein A, B, B', X, X', m, x, y, and z are defined in claim 1; wherein A is substituted or unsubstituted triphenylamine; wherein B comprises an amide unit; and wherein y and z equal zero, under the proviso that the compound 4,4',4"-tris(stearoylamino)triphenylamine is excluded.

11. Use of a compound of formula (1) as defined in any of claims 1 to 5 as a nucleating agent for a crystallizable thermoplastic polymer.
